(19) Europäisches Patentamt
European Patent Office
Office européen des brevets

(11) Numéro de publication: **0 240 405**
**A1**

(12) # DEMANDE DE BREVET EUROPEEN

(21) Numéro de dépôt: **87400632.3**

(51) Int. Cl.$^3$: **G 01 N 30/96**

(22) Date de dépôt: **20.03.87**

(30) Priorité: **24.03.86 FR 8604181**

(43) Date de publication de la demande:
**07.10.87 Bulletin 87/41**

(84) Etats contractants désignés:
**AT BE CH DE GB IT LI NL**

(71) Demandeur: **SOCIETE NATIONALE ELF AQUITAINE**
**Société anonyme dite**
**Tour Elf 2, Place de la Coupole La Défense 6**
**F-92078 Courbevoie(FR)**

(72) Inventeur: **Rumeau, Michel**
**1 rue Marca**
**F-64000 Pau(FR)**

(72) Inventeur: **Grall, Marcel**
**10 avenue du Pesque**
**F-64300 Orthez(FR)**

(72) Inventeur: **Couput, Jean-Paul**
**Impasse René Olivier**
**F-64320 Bizanos(FR)**

(74) Mandataire: **Boillot, Marc**
**SOCIETE NATIONALE ELF AQUITAINE Division Propriété Industrielle Tour Elf**
**F-92078 Paris la Défense Cédex 45(FR)**

(54) **Procédé et dispositif d'analyse quantitative d'ions par chromatographie.**

(57) Procédé d'analyse quantitative d'ions par chromatographie dans lequel on fait passer un échantillon contenant ces ions et un éluant dans une première colonne contenant une résine échangeuse d'ions pour opérer la séparation chromatographique de ces ions et l'on fait passer l'effluent de cette première colonne dans une deuxième colonne contenant une résine échangeuse d'ions de nature différente de celle de la résine contenue dans la première colonne pour rendre les ions susceptibles d'être détectés sans détruire la séparation obtenue dans la première colonne.

Ce procédé est caractérisé en ce que, à la sortie de la deuxième colonne, l'effluent qui sort en entraînant chaque ion dans l'ordre déterminé par sa nature et amené dans une cellule de mesure de pH, on relève la variation du pH en fonction du temps et on calcule la concentration à partir de l'intégration de la courbe de variation du pH.

Application au dosage de traces dans les eaux usées et autres effluents industriels.

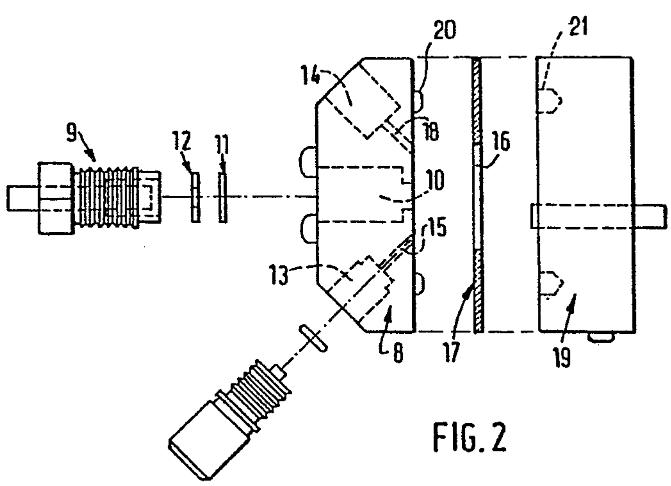


FIG. 2

EP 0 240 405 A1

SOCIETE NATIONALE ELF AQUITAINE
DPI 5132
PROCEDE ET DISPOSITIF D'ANALYSE QUANTITATIVE D'IONS PAR CHROMATOGRAPHIE

---

L'invention a pour objet un procédé d'analyse quantitative d'ions par chromatographie dans lequel on fait passer un échantillon contenant ces ions et un éluant dans une première colonne contenant une résine échangeuse d'ions pour opérer la séparation chromatographique de ces ions et l'on fait passer l'effluent de cette première colonne dans une deuxième colonne contenant une résine échangeuse d'ions de nature différente de celle de la résine contenue dans la première colonne pour rendre les ions susceptibles d'être détectés sans détruire la séparation obtenue dans la première colonne.

Elle a également pour objet un dispositif de mise en oeuvre de ce procédé.

Cette méthode d'analyse est par exemple connue d'après le brevet des Etats-Unis d'Amérique n° 3 920 397 publié le 18 novembre 1975. Ce brevet décrit le procédé évoqué ci-dessus où la détection des espèces ioniques issues de la deuxième colonne se fait par passage dans une cellule de conductimétrie, lecture de la variation de conductivité résultant du passage d'une espèce ionique et intégration du signal délivré par la cellule.

Cette méthode donne de bons résultats mais elle est d'application délicate pour la raison suivante : la conductivité de chaque espèce ionique étant extrêmement variable et imprévisible par le calcul, il est indispensable d'étalonner l'appareillage en y faisant passer une solution "synthétique" contenant les mêmes ions que la solution échantillon à doser. Les concentrations de chaque ion dans la solution à doser s'obtiennent donc par corrélation entre l'intégrale de son "pic" et du "pic" correspondant de la solution synthétique.

Le but de la présente invention est de rendre ce procédé d'analyse plus simple par suppression de la nécessité d'étalonner.

A cet effet, l'invention a pour objet un procédé d'analyse quantitative d'ions par chromatographie dans lequel on fait passer un échantillon contenant ces ions et un éluant dans une première colonne contenant une résine échangeuse d'ions pour opérer la séparation chromatographique de ces ions et l'on fait passer l'effluent de cette première colonne dans une deuxième colonne contenant une résine échangeuse d'ions de nature différente de celle de la résine contenue dans la première colonne pour rendre les ions susceptibles d'être détectés sans détruire la séparation obtenue dans la première colonne, caractérisé en ce que, à la sortie de la deuxième colonne, l'effluent qui sort en entraînant chaque ion dans l'ordre déterminé par sa nature est amené dans une

cellule de mesure de pH, on relève la variation du pH en fonction du temps et on calcule la concentration par intégration de la courbe de variation du pH.

Selon une autre caractéristique de l'invention, on détecte les anions contenus dans une solution échantillon par passage de cette solution dans la première colonne chargée de résine échangeuse d'anions se trouvant sous sa forme $HCO_3^-$ puis passage dans la deuxième colonne chargée de résine échangeuse de cations se trouvant sous sa forme $H^+$ pour obtenir les anions sous forme dissociée et relever les variations de pH résultant de leur passage.

Selon encore une autre caractéristique de l'invention, on détecte les cations contenus dans une solution échantillon par passage de cette solution dans la première colonne chargée de résine échangeuse de cations se trouvant sous sa forme $H^+$ puis passage dans la deuxième colonne chargée de résine échangeuse d'anions se trouvant sous sa forme $OH^-$ pour obtenir les cations sous forme dissociée et relever les variations de pH résultant de leur passage.

Cette façon de procéder repose sur le fait que les anions introduits dans le dispositif en ressortent sous forme d'acides libres exempts de leurs cations associés au départ et leur pH correspond donc exactement à leur concentration s'il s'agit d'acides forts complètement dissociés. Il y correspond de même suivant une loi facile à établir s'il s'agit d'acides faibles incomplètement dissociés. La même considération s'applique aux cations qui ressortent sous forme de bases libres dont on obtient le pH comme mesure de concentration s'il s'agit de bases fortes et par une corrélation simple s'il s'agit de bases faibles.

La présente invention a encore pour objet un dispositif de mise en oeuvre du procédé ci-dessus comprenant notamment un réservoir d'éluant, un système de pompage, un injecteur d'échantillon, deux colonnes disposées en séries, un

détecteur et un enregistreur, caractérisé en ce que le détecteur est une cellule de mesure du pH et, suivant une autre caractéristique avantageuse de l'invention, l'élément détecteur de la cellule de mesure du pH est un transistor à effet de champ sensible aux ions (ISFET), par exemple un transistor constitué d'une membrane à base de nitrure de silicium ou de tout autre matériau sélectif aux ions $H^+$ (oxyde d'aluminium $Al_2O_3$, oxyde de tantale $Ta_2O_5$...) et utilisé en remplacement de l'électrode de verre d'une cellule classique de mesure du pH.

L'intérêt de ce dispositif est que l'électrode selon l'invention répond suivant la loi de Nernst dans un large domaine de pH, de 1 à 12, beaucoup mieux que les électrodes de verre classique à cause de la faible impédance qu'elle présente. En outre, les dimensions de l'électrode de ISFET, de l'ordre du $mm^2$, sont beaucoup plus faibles que celles d'une électrode verre. Ceci permet avantageusement de diminuer les dimensions de la cellule de mesure ainsi que le volume d'échantillon nécessaire pour une analyse et le temps de réponse à une variation du pH et agit donc favorablement dans le sens de l'augmentation de la sensibilité et de la précision de l'analyse.

L'invention sera mieux comprise à l'aide de la description qui va suivre et des dessins joints dans lesquels :
- la figure 1 représente le schéma de principe d'un chromatographe équipé de la cellule selon l'invention,
- la figure 2 représente une vue schématique éclatée des diverses pièces constituant la cellule de mesure slon l'invention,
- la figure 3 représente la courbe de réponse du détecteur ISFET, et
- les figures 4 et 5 représentent les chromatogrammes de deux solutions contenant différents ions.

Sur la figure 1, le chromatographe comporte, disposés à la suite l'un de l'autre, un réservoir d'éluant 1, une pompe à débit constant 2 un dispositif 3 d'injection de

l'échantillon, une première colonne 4 de séparation des ions, une deuxième colonne 5 de neutralisation de l'éluant, la cellule 6 de mesure du pH et un bloc 7 de lecture, intégration et affichage des résultats.

Sur la figure 2, la cellule 6 de mesure du pH est constituée d'un bloc 8 portant l'électrode de référence 9 logés dans l'évidement 10 du bloc 8 avec interposition de la membrane 11 et de la rondelle 12. Dans ce bloc 8, sont encore pratiqués un évidement 13 et un évidement 14. L'évidement 13 reçoit l'embout 15 d'introduction de l'échantillon, cet embout étant en même temps relié à une prise de terre non représentée. L'échantillon pénètre par le conduit 15 dans la perforation 16 pratiquée dans le joint 17 et il ressort de la cellule par le conduit 18. Le bloc électrode 19 est, lorsque la cellule est en état de fonctionner, rapproché du bloc 8 avec interposition du joint 16, des pions d'alignement 20 destinés à s'engager dans les évidements correspondants 21 étant prévus pour assurer un positionnement réciproque correct des blocs 8 et 19. Ce bloc 19 supporte la membrane électrode ISFET reliée par deux conducteurs non représentés à un appareil de mesure de différence de potentiel entre la membrane électrode ISFET et l'électrode de référence 11.

Sur la figure 3 représentant une courbe de calibration d'un détecteur ISFET, on a en abscisse les unités de pH et en ordonnée les différences de potentiel que l'on mesure quand il y a variation du pH de la solution qui passe dans la cellule de mesure. On constate que la courbe qui représente cette différence de potentiel en fonction du pH est pratiquement une droite dont la pente est de 48 mV (millivolts) par unité de pH.

La figure 4 représente le résultat de l'analyse d'une solution contenant des ions $F^-$, $Cl^-$, $NO_2^-$ et $PO_4^{3-}$. L'échantillon est injecté en un temps très court en même

temps qu'un débit constant d'éluant aqueux à faible concentration de $Na^+HCO_3$ dans la première colonne chargée de résine échangeuse de cations se trouvant sous sa forme $OH^-$ puis dans la deuxième colonne chargée de résine échangeuse d'anions se trouvant sous sa forme $H^+$. Le relevé et le calcul des pics successifs indique des concentrations de 15 ppm d'ions $F^-$, 32 ppm d'ions $Cl^-$, 32 ppm d'ions $NO_2^-$ et 143 ppm d'ions $PO_4^{3-}$.

De même la figure 5 représente une analyse d'ions $HCOO^-$ et $CH_3CH_2COO^-$ pour laquelle le mode opératoire sensiblement identique à celui décrit ci-dessus indique des concentrations de 142 ppm d'ions $HCOO^-$ et 505 ppm d'ions $CH_3$ $CH_2$ $COO^-$.

Bien entendu, l'invention n'est pas limitée aux modes de réalisation ci-dessus décrits et représentés à partir desquels le spécialiste pourra mettre au point d'autres variantes sans se départir de l'esprit et de la portée de la présente invention.

REVENDICATIONS

1. Procédé d'analyse quantitative d'ions par chromatographie dans lequel on fait passer un échantillon contenant ces ions et un éluant dans une première colonne contenant une résine échangeuse d'ions pour opérer la séparation chromatographique de ces ions et l'on fait passer l'effluent de cette première colonne dans une deuxième colonne contenant une résine échangeuse d'ions de nature différente de celle de la résine contenue dans la première colonne pour rendre les ions susceptibles d'être détectés sans détruire la séparation obtenue dans la première colonne, caractérisé en ce que, à la sortie de la deuxième colonne, l'effluent qui sort en entraînant chaque ion dans l'ordre déterminé par sa nature est amené dans une cellule de mesure de pH, on relève la variation du pH en fonction du temps et on calcule la concentration à partir de l'intégration de la courbe de variation du pH.

2. Procédé suivant la revendication 1 caractérisé en ce que l'on détecte les anions contenus dans une solution échantillon par passage de cette solution dans la première colonne chargée de résine échangeuse d'anions se trouvant sous sa forme $HCO_3^-$ puis passage dans la deuxième colonne chargée de résine échangeuse de cations se trouvant sous sa forme $H^+$ pour obtenir les anions sous forme dissociée et relever les variations de pH résultant de leur passage.

3. Procédé selon la revendication 1 caractérisé en ce que l'on détecte les cations contenus dans une solution échantillon par passage de cette solution dans la première colonne chargée de résine échangeuse de cations se trouvant sous sa forme $H^+$ puis passage dans la deuxième colonne chargée de résine échangeuse d'anions se trouvant sous sa forme $OH^-$ pour obtenir les cations sous forme dissociée et relever les variations de pH résultant de leur passage.

4. Dispositif de mise en oeuvre du procédé selon les revendications 1 à 3 comprenant notamment un réservoir d'éluant, un système de pompage, un injecteur d'échantillon, deux colonnes disposées en séries, un détecteur et un enregistreur, caractérisé en ce que le détecteur est une cellule de mesure du pH.

5. Dispositif selon la revendication 4, caractérisé en ce que l'élément détecteur de la cellule de mesure du pH est un ISFET.

6. Dispositif selon la revendication 5, caractérisé en ce que cet ISFET est une membrane à base de nitrure de silicium $Si_3N_n$ ou de tout autre matériau sélectif aux ions $H^+$ (oxyde d'aluminium $Al_2O_3$, oxyde de tantale $Ta_2O_5$...).

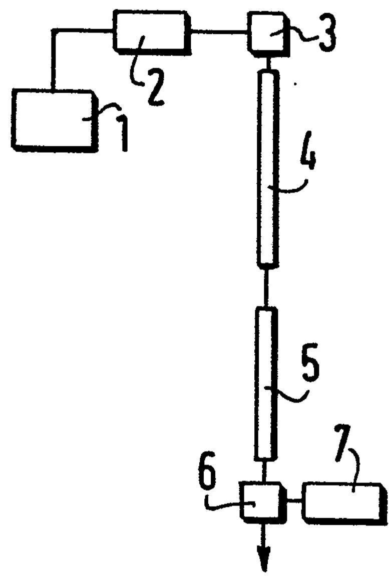


FIG.1

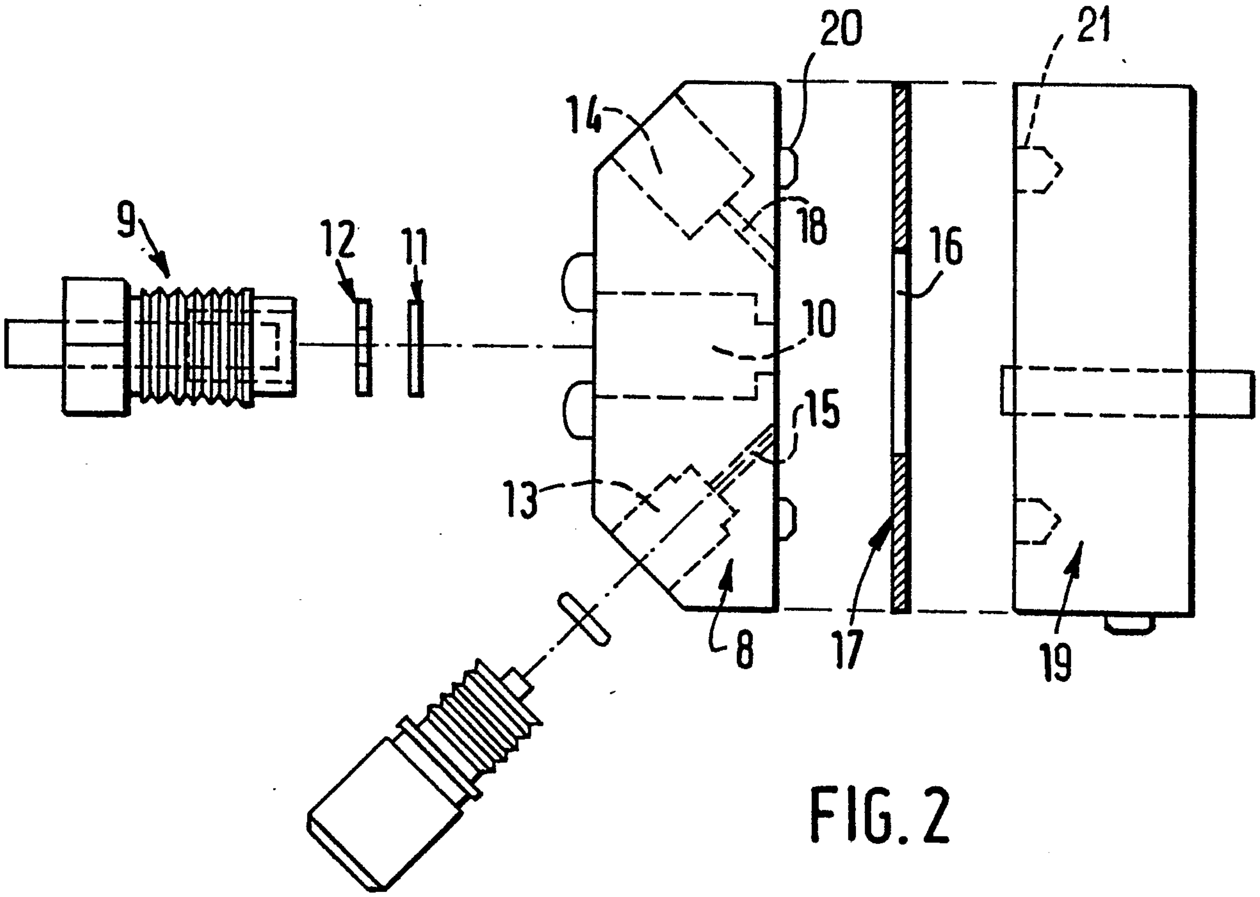


FIG.2

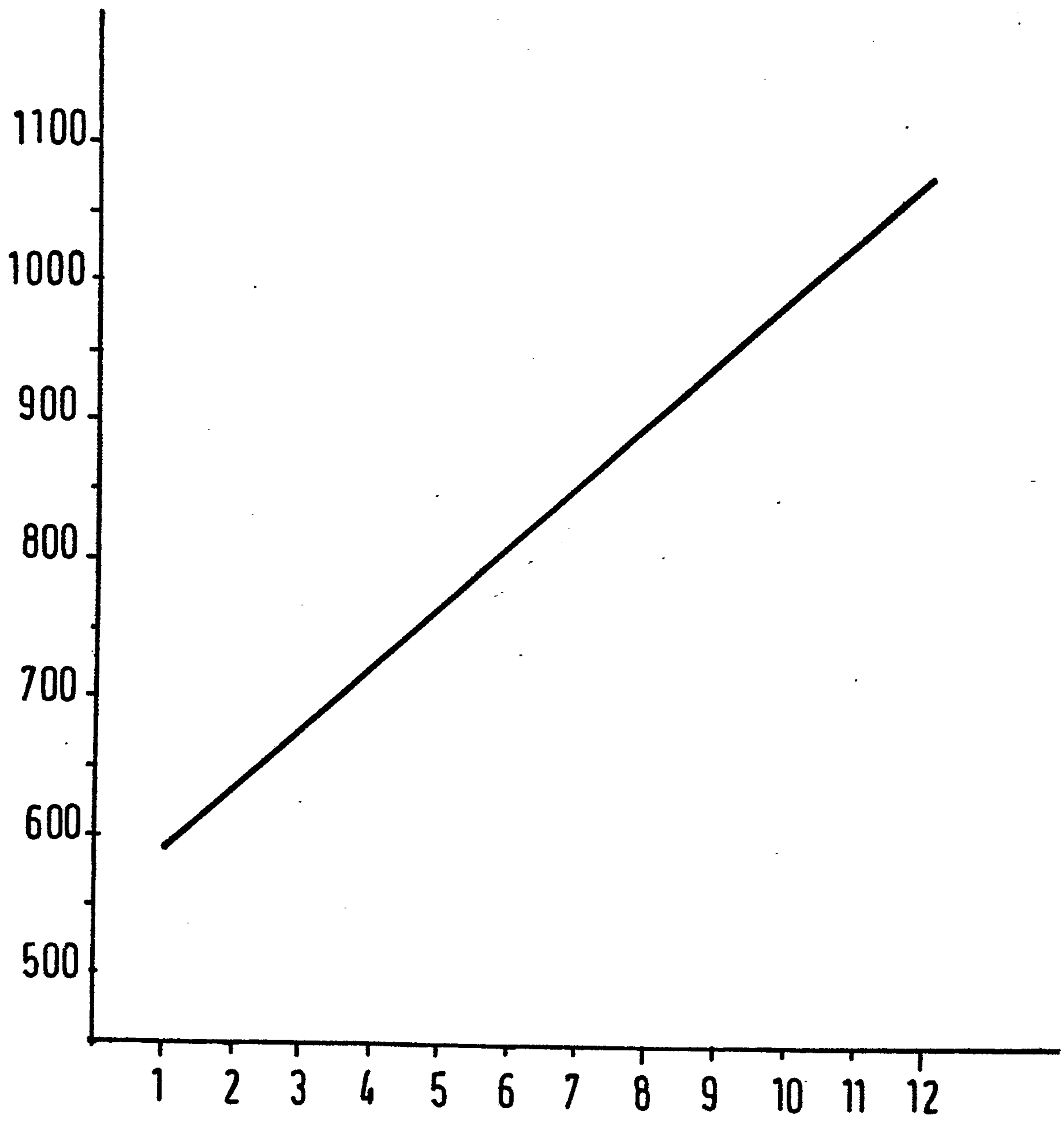


FIG.3

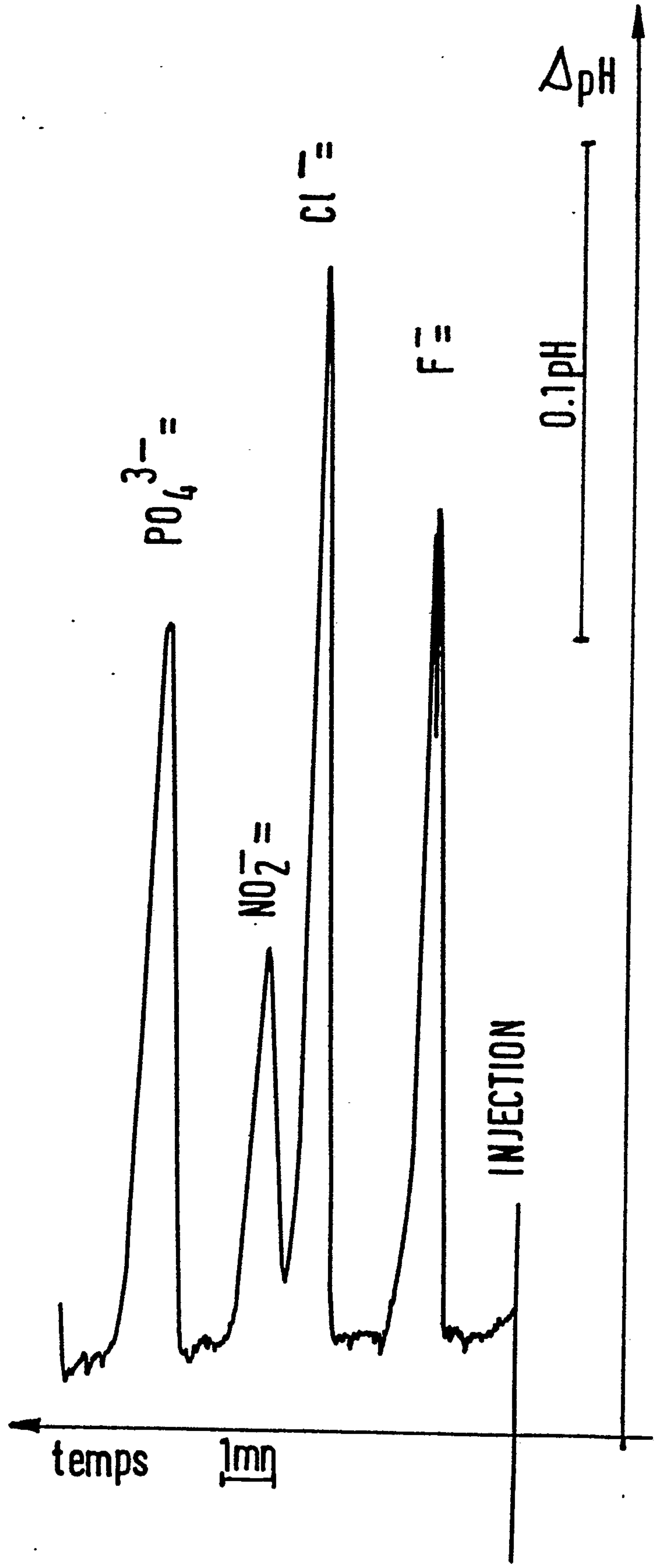


FIG.4

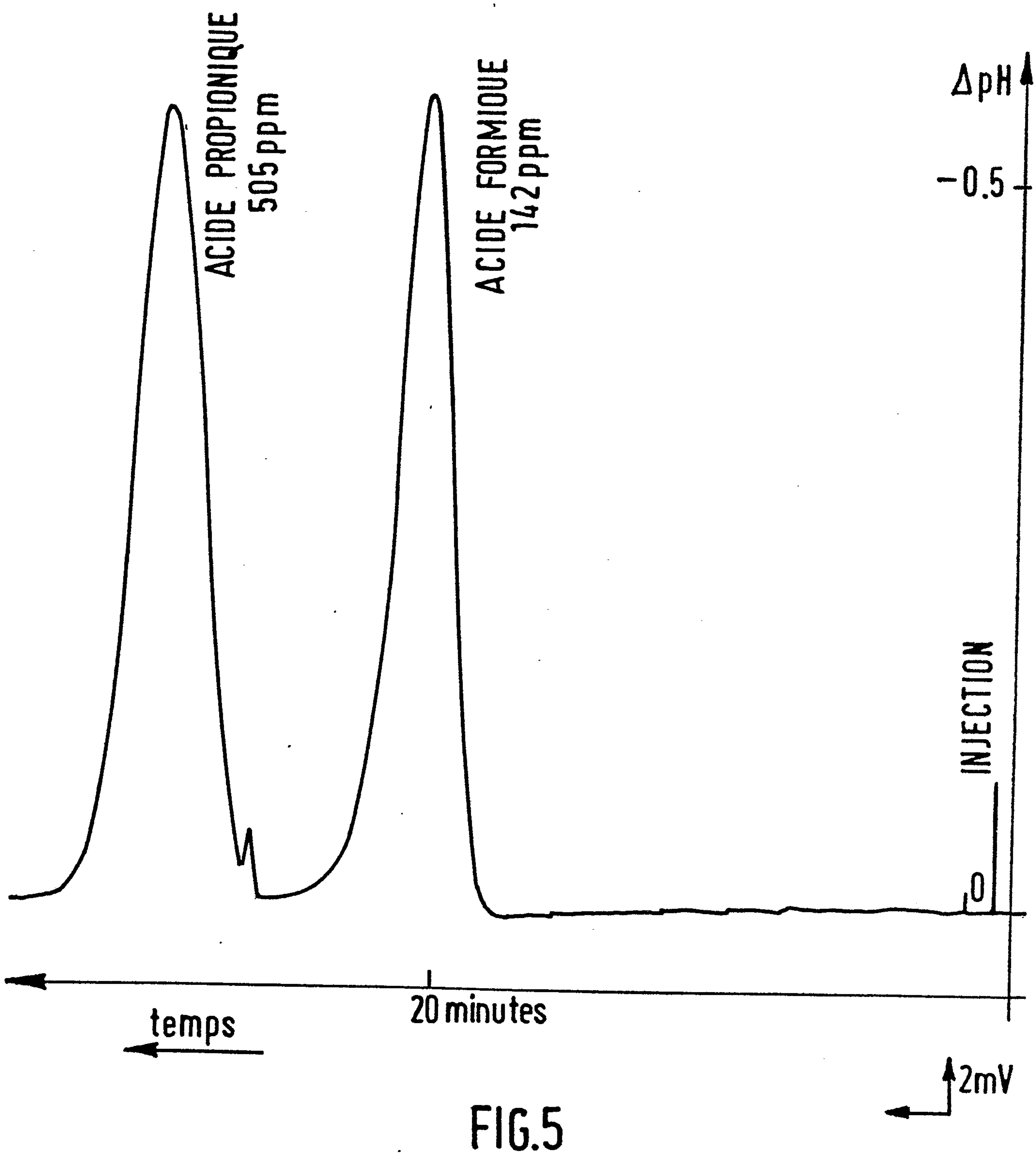
ACIDE PROPIONIQUE
505 ppm
ACIDE FORMIQUE
142 ppm
ΔpH
-0.5
INJECTION
0
20 minutes
temps
2mV

FIG.5

Office européen des brevets

**RAPPORT DE RECHERCHE EUROPEENNE**

0240405

Numero de la demande

EP 87 40 0632

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | US-A-4 242 097 (W.E. RICH)<br>* Résumé *<br>--- | 1-4 | G 01 N 30/96 |
| A | US-A-4 017 262 (H. SMALL)<br>* Résumé *<br>--- | 2-4 | |
| A | GB-A-2 045 638 (IMPERIAL CHEMICAL INDUSTRIES)<br>--- | | |
| A | FR-A-2 563 007 (YOKOGAWA HOKUSHIN ELECTRIC CORP.)<br>----- | | |

DOMAINES TECHNIQUES RECHERCHES (Int. Cl.4)

G 01 N 30/96

Le présent rapport de recherche a été établi pour toutes les revendications

| Lieu de la recherche | Date d'achèvement de la recherche | Examinateur |
|---|---|---|
| LA HAYE | 06-07-1987 | CALLEWAERT-HAEZEBROU |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant